# EUROPEAN PATENT SPECIFICATION

(11) **EP 1 802 049 B1**
(45) Date of publication and mention of the grant of the patent: **05.11.2008**
(21) Application number: 05805705.0
(22) Date of filing: 28.10.2005
(51) Int. Cl.: H04L 12/56, H04Q 7/22, H04L 12/18, H04L 12/24

(54) **A METHOD AND SYSTEM FOR CONTROLLING MULTIMEDIA BROADCAST/MULTICAST SERVICE SESSION**
VERFAHREN UND SYSTEM ZUR STEUERUNG EINER MULTIMEDIA-BROADCAST/MULTICAST-SERVICE-SITZUNG
PROCEDE ET SYSTEME PERMETTANT DE COMMANDER UNE SESSION D'UN SERVICE DE DIFFUSION/MULTIDIFFUSION MULTIMEDIA

(30) Priority: 28.10.2004 CN 200410086823
(43) Date of publication of application: 27.06.2007
(73) Proprietor: Huawei Technologies Co., Ltd., Longgang District, Shenzhen Guangdong 518129 (CN)
(72) Inventor: ZHANG, Hai, Shenzhen, Guangdong 518129 (CN)
(74) Representative: Thun, Clemens
(86) International application number: PCT/CN2005/001790
(87) International publication number: WO 2006/045252

(56) References cited:
- WO-A-01/50687
- WO-A1-02/067605
- CN-A- 1 581 744
- US-B2- 6 701 155
- 3GPP TECHNICAL SPECIFICATION GROUP SERVICES AND SYSTEM ASPECTS: "TS 23.246 V6.2.0: Multimedia Broadcast/Multicast Service (MBMS)" 3GPP TS 23.246 V6.2.0, March 2004 (2004-03), pages 1-40, XP002302177
- "Universal Mobile Telecommunications System (UMTS); Multimedia Broadcast/Multicast Service (MBMS); Architecture and functional description (3GPP TS 23.246 version 6.5.0 Release 6); ETSI TS 123 246" ETSI STANDARDS, EUROPEAN TELECOMMUNICATIONS STANDARDS INSTITUTE, SOPHIA-ANTIPO, FR, vol. 3-SA2, no. V650, December 2004 (2004-12), XP014027539 ISSN: 0000-0001

## Description

### Field of the Invention

The present invention relates to the Multimedia Broadcast Multicast Service (MBMS) session technology and, more particularly, to a method and a system for controlling an MBMS session procedure.

### Background of the Invention

Along with the development of the 3rd Generation (3G) mobile communications technology, the 3G mobile communication system provides services of higher rate than the 2G mobile communication system does and thus supports services of more varieties, such as: video phone, image downloading, high-speed internet surfing, etc. One type of the services has a feature that a service, for example, weather forecast, newsreel or sports broadcast collections, etc., could be sent simultaneously to all the subscribers of the service in a radio network. The concept of broadcast/multicast is thus introduced into the 3G mobile communication.

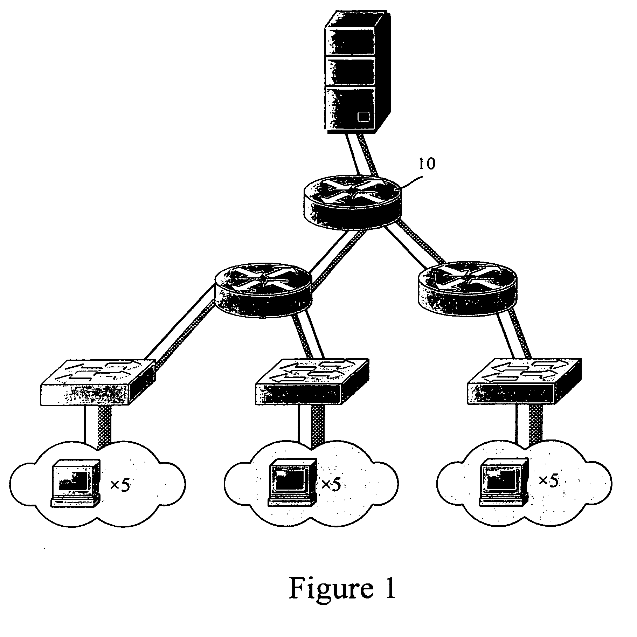

As shown in Figure 1, no matter how many downstream nodes of an intermediate node, e.g. Node 10, are expecting to receive data, an upstream node of the intermediate node always sends one copy of the data to the intermediate node; after receiving the data, Node 10 replicates the data based on the number of its downstream nodes expecting to receive the data, and distributes the data to each of the downstream nodes expecting to receive the data. In this way, only one copy of the data is transmitted on each branch of the transmission tree of MBMS service, occupying only one part of resources for transmission, and so does the data transmission between a root node and downstream nodes thereof. The difference between a multicast service and a broadcast service is that the multicast service only sends information to the subscribers who have subscribed to the information while the broadcast service sends information to all the subscribers in a radio network. As can be seen from the above description, many network resources could be stored by using an MBMS service to provide identical information for a large number of subscribers simultaneously.

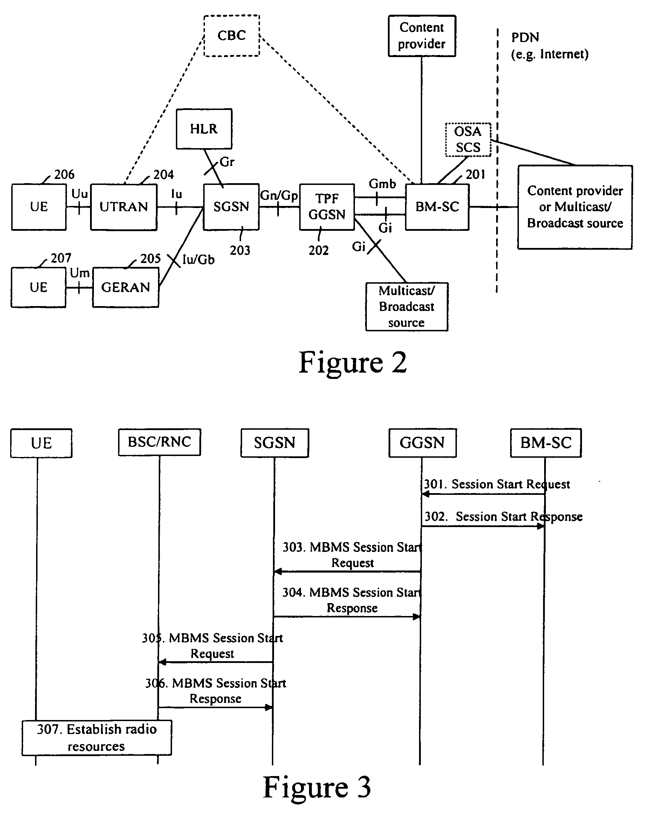

Figure 2 is a schematic diagram illustrating the architecture of a radio network supporting broadcast/multicast services. As shown in Figure 2, in the conventional 3rd Generation Partnership Project (3GPP), for example, as described in 3GPP TS 23.246 V6.2.0, the radio network entity supporting an MBMS service is Broadcast/Multicast-Service Center (BM-SC) 201. BM-SC 201 is connected with a TPF Gateway GPRS Support Node (GGSN) 202 via interface Gmb or Gi, and one BM-SC 201 may be connected with multiple TPF GGSN 202; TPF GGSN 202 is connected with Serving GPRS Support Node (SGSN) 203 via interface Gn/Gp, and one GGSN 202 may be connected with multiple SGSN 203; SGSN 203 may be connected with Universal Mobile Telecommunication System (UMTS) Terrestrial Radio Access Network (UTRAN) 204 via interface Iu, and UTRAN 204 is connected with User Equipment (UE) 206 via interface Uu; or SGSN 203 is connected with Global System for Mobile Communication (GSM)/EDGE Radio Access Network (GERAN) 205 via interface lu/Gb, and the GERAN 205 is connected with UE 207 via interface Um. GGSN and SGSN are the nodes of a Core Network (CN) in a radio network.

In an MBMS service, an MBMS Bearer Context is for use in storing the MBMS bearer capabilities, and the MBMS Bearer Context contains all information describing a particular MBMS bearer service and is created in each node involved in the delivery of MBMS data. As described in Table 1, the MBMS Bearer Context includes IP multicast address, Access Point Name (APN), Temporary Mobile Group Identity (TMGI), State, required MBMS Bearer capabilities, Quality of Service (QoS), MBMS Service Area, list of downstream nodes, multicast/broadcast mode, etc. The IP multicast address identifies the MBMS bearer described by this MBMS Bearer Context; APN is the access point name on which this IP multicast address is defined; TMGI is a temporary mobile group identifier allocated for the MBMS bearer service; State refers to the state of bearer plane resources, including 'standby' or 'active', reflecting whether the bearer plane resources are required for the transfer of MBMS data; the required MBMS bearer capabilities identify Minimum bearer capabilities the UE needs to support; QoS is the quality of service required for the MBMS bearer service; the MBMS Service Area refers to the area over which the MBMS bearer service has to be distributed; the list of downstream nodes is a list of downstream nodes that have requested the MBMS bearer service and to which the MBMS data has to be forwarded; the multicast/broadcast mode indicates that an MBMS bearer service is in a multicast or broadcast mode. '×' as shown in Table 1 indicates that the information is stored in the corresponding network entity.

**Table 1**

| Parameter | Description | RAN | SGSN | GGSN | BM-SC |
|---|---|---|---|---|---|
| IP multicast address (multicast mode only) | The IP multicast address identifying the MBMS bearer described by this MBMS Bearer Context | × | × | × | × |
| APN (multicast mode only) | Access Point Name on which this IP multicast address is defined | × | × | × | × |
| TMGI | Temporary Mobile Group Identity allocated for the MBMS bearer service | × | × | × | × |
| State | State of the bearer plane resources ('standby' or 'active') | × | × | × | × |
| Required MBMS Bearer Capabilities | Minimum bearer capabilities the UE needs to support the UE needs to support | | × | × | × |
| QoS | Quality of service required for the MBMS bearer service | × | × | × | × |
| MBMS Service Area | Area over which the MBMS bearer service has to be distributed | × | × | × | × |
| List of downstrea m nodes | List of downstream nodes that have requested the MBMS bearer service and to which the MBMS data has to be forwarded | | × | × | × |
| Multicast /broadcast mode | The MBMS bearer service in a multicast or broadcast mode | × | × | × | × |

The BM-SC initiates an MBMS Session Start procedure when it is ready to send data, so as to activate all necessary bearer resources in the network for the transfer of MBMS data, and to notify the interested UE of the imminent start of data transmission. Through the MBMS Session Start procedure, the BM-SC provides session attributes such as QoS, MBMS service and estimated session duration for a GGSN and an SGSN that are previously registered for the corresponding MBMS bearer service and for all Base station controllers/Radio network controllers (BSCs/RNCs) connected to the registered SGSN. In addition, the MBMS Session Start procedure allocates bearer planes for all the registered GGSNs and SGSNs and for the BSCs/RNCs that respond to the MBMS Session Start procedure.

For a multicast MBMS bearer service, the registration of SGSNs and GGSNs is initiated through an MBMS multicast service activation procedure and an MBMS registration procedure.

For a broadcast MBMS bearer service, the registration of SGSN and GGSN is performed via an Operation and maintenance (OAM) platform, i.e. MBMS Bearer Contexts on a BM-SC and a GGSN are configured via the OAM platform, that is, each list of downstream nodes of broadcast MBMS bearer service is defined.

As shown in Figure 3, a session start procedure of an MBMS multicast service in the prior art includes the following steps.

Step 301: the BM-SC sends a session start request message, hereinafter referred to as Session Start Request message, to GGSNs listed in the 'list of downstream nodes' parameter of the corresponding MBMS Bearer Context, to indicate the impending start of transmission, and the State attribute of its MBMS Bearer Context is set to 'active'. The Session Start Request message contains session attributes such as TMGI, QoS, MBMS Service Area, session identifier, estimated session duration, broadcast/multicast, etc., and a 2G/3G indicator.

Step 302: after receiving the Session Start Request, the GGSN stores the session attributes contained in the Session Start Request message in the MBMS Bearer Context and sets the State attribute of its MBMS Bearer Context to 'active', and returns a session start response message, hereinafter referred to as Session Start Response message, to the BM-SC.

Step 303: the GGSN sends an MBMS session start request message, hereinafter referred to as MBMS Session Start Request message, to each SGSN listed in the 'list of downstream nodes' parameter of the corresponding MBMS Bearer Context. The MBMS Session Start Request message contains session attributes such as TMGI, QoS, MBMS Service Area, session identifier, estimated session duration, broadcast/multicast, etc., and a 2G/3G indicator.

For a broadcast MBMS bearer service, if having no MBMS Bearer Context therein, the SGSN can create an MBMS Bearer Context by itself.

Step 304: after receiving the MBMS Session Start Request message, the SGSN stores the session attributes and the 2G/3G indicator in the corresponding MBMS Bearer Context, sets the State attribute of its MBMS Bearer Context to 'active', and returns an MBMS session start response message, hereinafter referred to as MBMS Session Start Response message, to the GGSN, and the Session Start Response message contains a Tunnel Endpoint Identifier (TEID) for a bearer plane that the GGSN shall use for forwarding the MBMS data.

Step 305: the SGSN sends to each BSC and/or each RNC connected with the SGSN an MBMS session start request message, hereinafter referred to as MBMS Session Start Request message, which provides session attributes such as TMGI, QoS, MBMS Service Area, session identifier, estimated session duration, broadcast/multicast, etc., and a 2G/3G indicator. The SGSN uses the 2G/3G indicator to determine whether the MBMS Session Start Request message is sent only to BSCs, or only to RNCs, or to both BSCs and RNCs.

For a broadcast MBMS bearer service, if having no MBMS Bearer Context therein, the BSC/RNC creates an MBMS Bearer Context by itself.

Steps 306-307: the BSC in Iu mode/RNC stores the session attributes in the MBMS Bearer Context, sets the State attribute of its MBMS Bearer Context to 'active', and returns an MBMS session start response message, hereinafter referred to as MBMS Session Start Response message, to the SGSN connected with the BSC/RNC. The Iu mode BSC/RNC contains the TEID in the MBMS Session Start Response for an Iu bearer plane that the SGSN shall use for forwarding MBMS data.

In this step, if receiving multiple MBMS Session Start Request messages which contain parameters of the Iu bearer plane, the BSC/RNC will return only one successful MBMS Session Start Response message for establishing only one Iu bearer plane with one SGSN.

Hereinafter, the BSC/RNC establishes necessary radio resources for the transfer of MBMS data to the interested UE within the MBMS Service Area.

After completion of the session start procedure, the process enters the session performing procedure, i.e. the procedure for performing data communication by means of the radio resources established by the BSC/RNC.

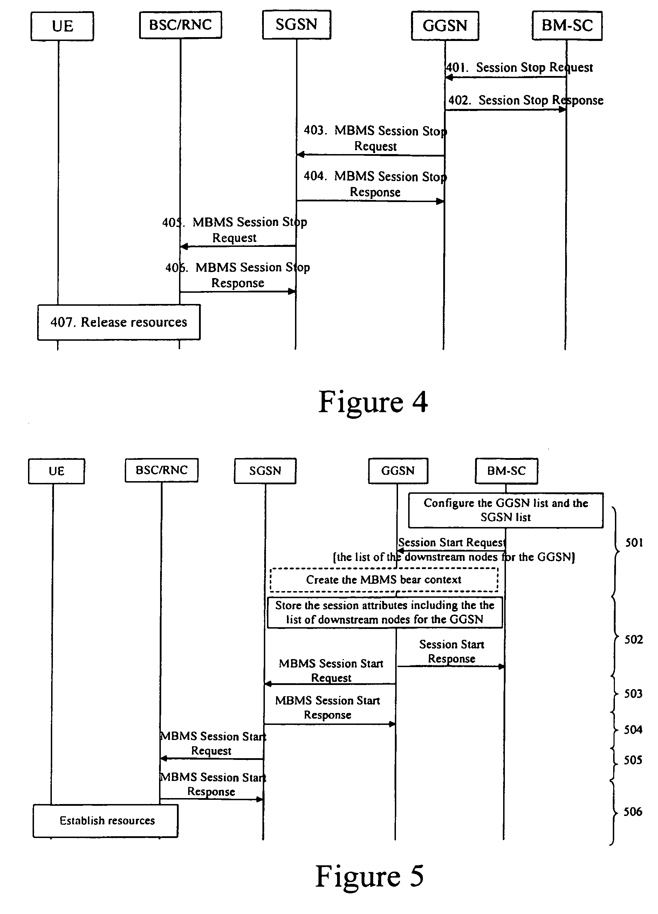

When considering that an MBMS session will be terminated, the BM-SC initiates an MBMS Session Stop procedure. In general, when there is no more MBMS data expected to be transmitted for a sufficiently long period of time, the BM-SC will consider that the session will be terminated. The MBMS Session Stop procedure is propagated to all the SGSNs and GGSNs that are registered for the corresponding MBMS bearer service and all the BSCs/RNCs having an established Iu bearer plane with the registered SGSNs. As shown in Figure 4, the conventional MBMS Session Stop procedure includes the following steps.

Step 401: the BM-SC sends a session stop request message, hereinafter referred to as Session Stop Request message, to GGSNs listed in the 'list of downstream nodes' parameter of the corresponding MBMS Bearer Context, to indicate that the MBMS session is terminated and the bearer plane resources may be released, and sets the State attribute of its MBMS Bearer Context to 'standby'.

Step 402: after receiving the Session Stop Request message, the GGSN returns a session stop response message, hereinafter referred to as Session Stop Response message, to the BM-SC.

Step 403: the GGSN sends an MBMS session stop request message, hereinafter referred to as MBMS Session Stop Request message, to all the SGSNs listed in the 'list of downstream nodes' parameter of the corresponding MBMS Bearer Context to release the corresponding bearer plane resources toward these SGSNs, and sets the State attribute of its MBMS Bearer Context to 'standby'.

Step 404: after receiving the MBMS Session Stop Request message, the SGSN returns an MBMS session stop response message, hereinafter referred to as MBMS Session Stop Response message, to the GGSN.

Step 405: the SGSN releases the TEID and the bearer plane resources on which the SGSN receives MBMS data from the GGSN for the corresponding MBMS bearer service, and sends an MBMS session stop request message, hereinafter referred to as MBMS Session Stop Request message, to all the BSCs/RNCs having a bearer plane established with the SGSN.

The SGSN may release the MBMS Bearer Context in the case of broadcast MBMS bearer service.

Steps 406-407: after the BSC/RNC receives the MBMS Session Stop Request message, the RNC releases the corresponding radio resources and Iu resources and the BSC releases the corresponding radio resources. Then, the BSC/RNC returns an MBMS session stop response message, hereinafter referred to as MBMS Session Stop Response message, to the SGSN.

The BSC/RNC may release the MBMS Bearer Context in the case of broadcast MBMS bearer service.

It can be seen from the above, as described in 3GPP TS 23.246 V6.2.0, a list of downstream nodes for the BM-SC is configured and stored in the BM-SC; the BM-SC sends a session start request message to each GGSN listed in the list of downstream nodes for the BM-SC; each GGSN receiving the session start request message sends a session start request message to each SGSN listed in the list of downstream nodes for the GGSN; the list of downstream nodes for the GGSN is configured in the GGSN via the OAM.

In the conventional technical scheme, when providing a broadcast MBMS bearer service, an operator needs to configure a BM-SC and a GGSN via an OAM manually; when deleting a broadcast MBMS bearer service, the operator also needs to delete the broadcast MBMS bearer service via the OAM manually. Obviously, it is inefficient for using the conventional technical scheme, which is adverse for the development of services and is easy to be in error.

### Summary of the Invention

Embodiments of the present invention provide a method and a system for controlling the MBMS session procedure, so as to automatically control the session start procedure and the session stop procedure, thereby reducing the probability that a service is in error and raising the efficiency of providing a service.

The solution in accordance with the embodiments of the present invention is as follows.

A method for controlling a MBMS session procedure in a radio communications system includes:
configuring and storing, in a BM-SC, a list of downstream nodes for the BM-SC and a list of downstream nodes for each GGSN, listed in the list of downstream nodes for the BM-SC;
in a procedure for starting a session, sending, by the BM-SC, to each respective GGSN listed in the list of downstream nodes for the BM-SC a session start request message containing the list of downstream nodes for each GGSN;
sending, by each GGSN receiving the session start request message, a session start request message to each SGSN listed in the list of downstream nodes for the GGSN; and
communicating, by each SGSN receiving the session start request message, with at least one Base station controller/Radio network controller, BSC/RNC, connected with the SGSN to complete the procedure for starting the session and wherein the MBMS allows for one or more broadcasting services.

The list of downstream nodes for the BM-SC is configured in the BS-SC via an OAM platform.

The list of downstream nodes for each GGSN is configured in the BS-SC via an OAM platform.

The configuring the list of downstream nodes for each GGSN includes:
obtaining, by the BM-SC, a total MBMS service area;
comparing the total MBMS service area with geographical coverage areas of all the SGSNs in the network to obtain an overlap area between the MBMS service area and the geographical coverage areas; and
inserting identifiers of all the SGSNs corresponding to the overlap area into the list of downstream nodes for each GGSN

The configuring the list of downstream nodes for each GGSN comprises:
obtaining, by the BM-SC, a total MBMS service area;
comparing the total MBMS service area with geographical coverage areas of all the SGSNs in the network to obtain an overlap area between the MBMS service area and the geographical coverage areas;
determining respectively for each GGSN at least one SGSN according to the topology relationship of the GGSN and all the SGSNs corresponding to the overlap area; and
inserting identifiers of the at least one SGSNs determined for each GGSN into the list of downstream nodes for the GGSN.

The obtaining the total MBMS service area includes:
obtaining the total MBMS service area from a content provider or a network operator, or configuring the total MBMS service area in the BM-SC via an OAM directly.

The method further includes:
returning, by the SGSN receiving the session start request message, a session start response message to one GGSN selected from at least two GGSNs if receiving at least two session start request messages respectively sent from the at least two GGSNs for the same MBMS bearer service.

The GGSN is selected according to a geographical location configured by the network or according to an order of receipt of the at least two session start request messages respectively sent from the at least two GGSNs.

The session start request message contains: session attributes such as TMGI, QoS, MBMS Service Area, session identifier, estimated session duration, broadcast/multicast, etc., and a 2G/3G indicator.

For a broadcast MBMS bearer service, in the procedure for starting the session, the GGSN, SGSN and BSC/RNC receiving the session start request determine whether an MBMS Bearer Context exists therein, and if the MBMS Bearer Context exists therein, continue the procedure for starting the session; and if the MBMS Bearer Context does not exist therein, create an MBMS Bearer Context according to the session attributes contained in the session start request message and continue the procedure for starting the session.

The method further includes:
storing, by the GGSN receiving the session start request message, the list of downstream nodes for the GGSN contained in the session start request message in the MBMS Bearer Context.

The method further includes:
recording, by each GGSN, an identifier of an SGSN which has returned the session start response message to the GGSN.

The method further includes: in a procedure for stopping the session,
sending, by each GGSN, a session stop request message to the SGSN which has returned the session start response message to the GGSN and is recorded in the GGSN.

The method further includes: in a procedure for stopping the session,
determining, by the SGSN receiving the session stop request message, whether the SGSN receiving the session stop request message has established a corresponding bearer plane for an MBMS bearer service with the GGSN sending the session stop request message;
if the SGSN receiving the session stop request message has established the corresponding bearer plane, returning a session stop response message to the GGSN sending the session stop request message.

The method further includes: for a broadcast MBMS bearer service, in a procedure for stopping the session, after receiving a session stop request message, releasing, by each of the GGSNs, the SGSNs and the BSCs/RNCs, an MBMS Bearer Context therein respectively after receiving a session stop request message.

The method further includes:
starting, by each of the GGSNs, the SGSNs and the BSCs/RNCs, a timer respectively upon receipt of the session stop request message;
releasing, by each of the GGSNs, the SGSNs and the BSCs/RNCs, the MBMS Bearer Context therein respectively if having not received any session start request message of a next session before the timer expires.

The method further includes: for a broadcast MBMS bearer service, after a procedure for stopping the session is completed, releasing, by each of the GGSNs, the SGSNs and the BSCs/RNCs, an MBMS Bearer Context immediately.

The at least one BSC/RNC connected with the SGSN includes at least one of
each BSC/RNC connected with the SGSN; and
at least one BSC/RNC connected with the SGSN and corresponding to an overlap area obtained by comparing a total MBMS service area with geographical coverage areas of all the BSCs/RNCs in the network.

A system for controlling the MBMS session procedure for radio communications includes: a BM-SC, at least one GGSN, at least one SGSN, and at least one BSC/RNC; wherein:
the BM-SC is adapted to create a list of downstream nodes for the BM-SC and a list of downstream nodes for each GGSN listed in the list of downstream nodes for the BM-SC;
the BM-SC is adapted to communicate with each GGSN listed in the list of downstream nodes for the BM-SC and send to each GGSN the list of downstream nodes for the GGSN in a procedure for starting a session;
each GGSN is adapted to communicate with each SGSN listed in the list of downstream nodes for the GGSN;
each SGSN and at least one BSC/RNC connected with the SGSN are adapted to communicate with each other to complete the session procedure, wherein the MBMS allows for one or more broadcasting services.

A Broadcast/Multicast-Service Center, BM-SC for controlling a Multimedia Broadcast Multicast Service, MBMS, session procedure in a radio communications system, includes:
means for creating a list of downstream nodes for the BM-SC and a list of downstream nodes for each Gateway GPRS Support Node, GGSN, listed in the list of downstream nodes for the BM-SC; and
means for sending the list of downstream nodes for each GGSN listed in the list of downstream nodes for the BM-SC to the GGSN, wherein the MBMS allows for one or more broadcasting services.

In accordance with the method and the system for controlling the MBMS session procedure provided by the embodiments of the present invention, respective lists of downstream nodes for the BM-SC and GGSN are configured in the BM-SC; in a session start procedure, the BM-SC sends a Session Start Request message to GGSNs listed in the list of downstream nodes saved in the BM-SC and each of the GGSNs sends a Session Start Request to SGSNs listed in the list of downstream nodes for each GGSN; in a session stop procedure, for a broadcast MBMS service, the BM-SC, GGSN, SGSN and the BSC/RNC delete their respective MBMS Bearer Contexts based on the practical condition; in this way, the session start and stop procedure can be automatically controlled, so as to enable the operator to provide MBMS services flexibly and conveniently, especially for the broadcast MBMS service, thereby reducing the cost of the operator, raising the efficiency of providing services, and reducing the probability that a service is in error.

In the technical scheme provided by the embodiments of the present invention, only the BM-SC needs to be configured when a broadcast MBMS service needs to be provided, thereby reducing the access to the OAM to reduce the probability that a service is in error. Moreover, after the session is terminated, the relevant MBMS Bearer Contexts are deleted to save resources. In addition, various implementation methods are provided by the embodiments of the present invention to provide strong flexibility and practicability. The technical scheme provided by the embodiments of the present invention only needs to modify little the conventional session processing procedure, thereby making the implementation easier and more convenient.

### Brief Description of the Drawings

Figure 1 is a schematic diagram illustrating the transmission principle of broadcast/multicast services.
Figure 2 is a schematic diagram illustrating the architecture of a radio network which supports MBMS broadcast/multicast services.
Figure 3 is a schematic diagram illustrating the session start procedure of an MBMS broadcast/multicast service in the prior art.
Figure 4 is a schematic diagram illustrating the session stop procedure of an MBMS broadcast/multicast service in the prior art.
Figure 5 is a schematic diagram illustrating the session start procedure of an MBMS broadcast/multicast service in accordance with an embodiment of the present invention.
Figure 6 is a schematic diagram illustrating the session stop procedure of an MBMS broadcast/multicast service in accordance with an embodiment of the present invention.
Figure 7 is a schematic diagram illustrating the network topology in accordance with an embodiment of the present invention.
Figure 8 is a schematic diagram illustrating the network topology of establishing a session in accordance with an embodiment of the present invention.
Figure 9 is a schematic diagram illustrating the areas administrated by all the SGSNs in accordance with an embodiment of the present invention.
Figure 10 is a schematic diagram illustrating the service coverage area in accordance with an embodiment of the present invention.

### Embodiments of the Invention

Embodiments of the present invention include: configuring and storing a list of downstream nodes for a BM-SC and a list of downstream nodes for GGSNs respectively in the BM-SC, and in particular, configuring a list of downstream nodes for the BM-SC, i.e. a GGSN list, and configuring a list of downstream nodes for each GGSN, i.e. an SGSN list. In a session start procedure, the BM-SC only sends to each GGSN listed in the list of downstream nodes saved in the BM-SC a session start request message containing the list of downstream nodes for the GGSN. For a broadcast MBMS service, if having no MBMS Bearer Context corresponding to the current MBMS, the GGSN creates an MBMS Bearer Context corresponding to the current MBMS service; correspondingly, each GGSN receiving the session start request only sends the session start request to the SGSN listed in the list of downstream nodes for the GGSN. In a session stop procedure, the GGSN releases the MBMS Bearer Context corresponding to the current MBMS session in the case of the broadcast MBMS service.

The GGSN list is configured via an OAM; the SGSN list may be configured via the OAM or may be obtained by comparing whether there is an overlap area between a total MBMS service area and the geographical coverage area of SGSNs in the network. The SGSN list is configured or obtained in the BM-SC, and is contained in the session start request issued from the BM-SC to the relevant GGSN. The total MBMS service area may be obtained via the OAM or obtained from a content provider or a network operator by the BM-SC; the comparison between the total MBMS service area and the geographical coverage area of the SGSN is implemented at the BM-SC, and the GGSN is notified of the comparison result in manner of a list of downstream nodes for the GGSN.

Each implementation scheme will be hereinafter described in detail with respect to the accompanying drawings and the specific embodiments.

In accordance with a first embodiment of the present invention, the operator, in the BM-SC through the OAM, configures not only a list of downstream nodes for the BM-SC, i.e. the GGSN list, but also a list of downstream nodes for each GGSN listed in the GGSN list, i.e. the SGSN list of each GGSN.

As shown in Figure 5, the session start procedure of the present embodiment preferably includes items 501-506.

501: a GGSN list and an SGSN list corresponding to each GGSN are configured in a BM-SC, and the BM-SC sends a session start request message, hereinafter referred to as Session Start Request message, to the GGSN listed in the GGSN list configured in the BM-SC, to indicate an impending start of transmission, and the State attribute of its MBMS Bearer Context is set to "active". The GGSN list is the 'list of downstream nodes' stored in the MBMS Bearer Context corresponding to the session, and the Session Start Request message contains session attributes such as TMGI, QoS, MBMS Service Area, session identifier, estimated session duration, broadcast/multicast, etc., and a 2G/3G indicator.

For a broadcast MBMS bearer service, the Session Start Request message further contains the list of downstream nodes for each GGSN. If having no MBMS Bearer Context corresponding to the current MBMS service, the GGSN creates an MBMS Bearer Context according to the session attributes contained in the Session Start Request message.

502: the GGSN stores in the MBMS Bearer Context the session attributes contained in the Session Start Request message and sets the State attribute of its MBMS Bearer Context to "active", and returns a Session Start Response message to the BM-SC. The session attribute saved in the GGSN includes the 'list of downstream nodes' for the GGSN.

503: the GGSN sends an MBMS session start request message, hereinafter referred to as MBMS Session Start Request message, to each SGSN listed in the 'list of downstream nodes' parameter of the corresponding MBMS Bearer Context. The MBMS Session Start Request message contains session attributes such as TMGI, QoS, MBMS Service Area, session identifier, estimated session duration, broadcast/multicast, etc., and a 2G/3G indicator.

For a broadcast MBMS bearer service, if having no MBMS Bearer Context therein, the SGSN can create an MBMS Bearer Context by itself.

504: after receiving the MBMS Session Start Request message, the SGSN stores the session attributes and the 2G/3G indicator in the corresponding MBMS Bearer Context, sets the State attribute of its MBMS Bearer Context to 'active', and returns an MBMS session start response message, hereinafter referred to as MBMS Session Start Response message, to the GGSN, and the Session Start Response message contains a Tunnel Endpoint Identifier (TEID) for a bearer plane that the GGSN shall use for forwarding the MBMS data.

505: the SGSN sends to the relevant BSC/RNC connected with the SGSN an MBMS session start request message, hereinafter referred to as MBMS Session Start Request message, which contains session attributes such as TMGI, QoS, MBMS Service Area, session identifier, estimated session duration, broadcast/multicast, etc., and a 2G/3G indicator. The SGSN uses the 2G/3G indicator to determine whether the MBMS Session Start Request message is sent only to BSCs, or only to RNCs, or to both BSCs and RNCs.

For a broadcast MBMS bearer service, if having no MBMS Bearer Context therein, the BSC/RNC may creates an MBMS Bearer Context by itself.

The relevant BSC/RNC may be each BSC/RNC connected with the SGSN or BSCs/RNCs connected with the SGSN and corresponding to an overlap area acquired by comparing the geographical coverage area of BSCs/RNCs and the MBMS service area.

506: the BSC in Iu mode/RNC stores the session attributes in the MBMS Bearer Context, sets the State attribute of its MBMS Bearer Context to 'active', and returns an MBMS session start response message, hereinafter referred to as MBMS Session Start Response message, to the SGSN connected with the BSC/RNC. The Iu mode BSC/RNC contains the TEID in the MBMS Session Start Response for an Iu bearer plane that the SGSN shall use for forwarding MBMS data.

Hereinafter, the BSC/RNC establishes within the MBMS service area the radio resources necessary for transmitting the MBMS data to the interested UE. Upon the completion of the session start procedure, the process enters the session performing procedure, i.e. the procedure for performing data communication by means of the radio resources established by the BSC/RNC.

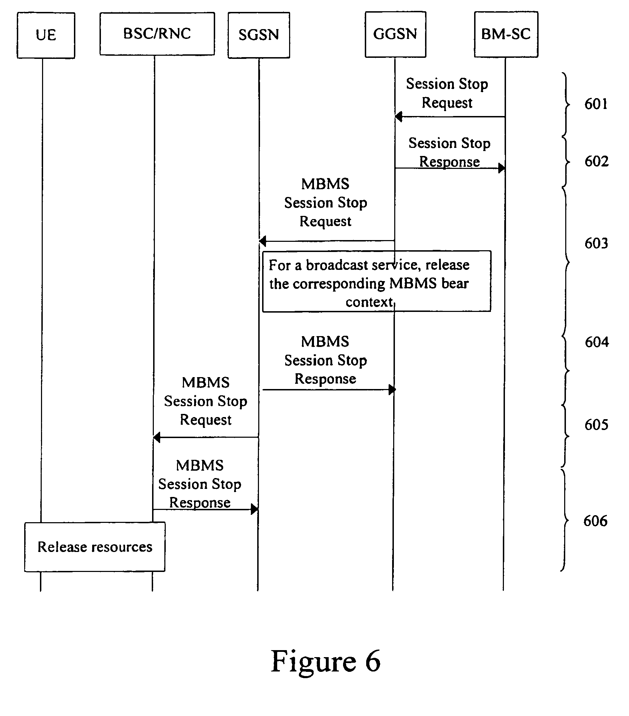

When considering that an MBMS session will be terminated, the BM-SC initiates an MBMS Session Stop Procedure. As shown in Figure 6, a session stop procedure preferably includes items 601-605.

601: the BM-SC sends a session stop request message, hereinafter referred to as Session Stop Request message, to GGSNs listed in the 'list of downstream nodes' parameter of the corresponding MBMS Bearer Context, to indicate that the MBMS session is terminated and the bearer plane resources may be released, and sets the State attribute of its MBMS Bearer Context to 'standby'.

602: after receiving the Session Stop Request message, the GGSN returns a session stop response message, hereinafter referred to as Session Stop Response message, to the BM-SC.

603: the GGSN sends an MBMS session stop request message, hereinafter referred to as MBMS Session Stop Request message, to SGSNs listed in the 'list of downstream nodes' of the corresponding MBMS Bearer Context to release the bearer plane resources corresponding to the SGSNs, and sets the State attribute of its MBMS Bearer Context corresponding to the GGSN to "standby".

For a broadcast MBMS bearer service, the GGSN may release the MBMS Bearer Context corresponding to the GGSN.

604: after receiving the MBMS Session Stop Request message, the SGSN returns an MBMS session stop response message, hereinafter referred to as MBMS Session Stop Response message, to the GGSN.

605: the SGSN releases the TEID and the bearer plane resources on which the SGSN receives MBMS data from the GGSN for the corresponding MBMS bearer service, and sends an MBMS session stop request message, hereinafter referred to as MBMS Session Stop Request message, to all the BSCs/RNCs having a bearer plane established with the SGSN.

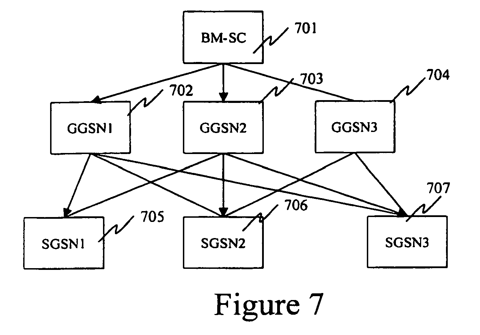

For example, there exists a mobile operation network; as shown in Figure 7, the network topology of the mobile operation network includes one BM-SC, three GGSNs and three SGSNs. The BM-SC connects with GGSN1, GGSN2 and GGSN3; both GGSN1 and GGSN2 connect with SGSN1, SGSN2 and SGSN3; and GGSN3 connects with SGSN2 and SGSN3. The network architecture as shown in Figure 7 and the BSC/RNC connected with SGSN1, SGSN2 and SGSN3 may constitute a system for controlling the MBMS session procedure; a list of downstream nodes for the BM-SC and a list of downstream nodes for each GGSN listed in the list of downstream nodes for the BM-SC are configured in the BM-SC of the system via an OAM.

When it is needed for providing broadcast MBMS bearer service A in the current network, a GGSN list and an SGSN list configured in the BM-SC via the OAM include: the list of downstream nodes for the BM-SC lists GGSN1 and GGSN2; a list of downstream nodes for GGSN1 lists SGSN1; a list of downstream nodes for GGSN2 lists SGSN2 and SGSN3.

The session start procedure of the example in accordance with the first embodiment of the present invention preferably includes items 11-16.

11) Since the downstream nodes of the BM-SC include GGSN1 and GGSN2, the BM-SC sends to GGSN1 and GGSN2 a session start request message, hereinafter referred to as Session Start Request message, respectively, to indicate that the impending start of transmission, and sets the State attribute of its MBMS Bearer Context to 'active'. The Session Start Request contains session attributes such as TMGI, QoS, MBMS Service Area, session identifier, estimated session duration, broadcast/multicast, etc., and a 2G/3G indicator. Since the current MBMS is a broadcast MBMS bearer service, the broadcast/multicast in the session attributes is broadcast.

The Session Start Request message further contains the list of downstream nodes corresponding to GGSN1 and GGSN2 respectively; the list of downstream nodes for GGSN1 only lists SGSN1; the list of downstream nodes for GGSN2 lists SGSN2 and SGSN3.

If having no MBMS Bearer Context corresponding to the current MBMS, GGSN1 and GGSN2 create an MBMS Bearer Context according to the session attributes contained in the Session Start Request message, respectively.

12) GGSN1 and GGSN2 store in their respective MBMS Bearer Contexts the session attributes contained in the received Session Start Request message and set the State attribute of their respective MBMS Bearer Contexts to "active", and respectively return a session start response message, hereinafter referred to as Session Start Response message, to the BM-SC respectively. The session attribute saved in a GGSN includes the list of downstream nodes for the GGSN. The list of downstream node for GGSN 1 includes an identifier of SGSN1; the list of downstream node for GGSN2 includes identifiers of SGSN2 and SGSN3.

13) GGSN1 and GGSN2 respectively sends an MBMS session start request message, hereinafter referred to as MBMS Session Start Request message, to the SGSNs listed in their respective lists of downstream nodes. The MBMS Session Start Request message contains session attributes such as TMGI, QoS, MBMS Service Area, session identifier, estimated session duration, broadcast/multicast, etc., and a 2G/3G indicator. Since the current MBMS bearer service is a broadcast MBMS bearer service, the broadcast/multicast of the session attribute is broadcast.

If having no MBMS Bearer Context corresponding to the current MBMS bearer service, SGSN1, SGSN2 and SGSN3 create their respective MBMS Bearer Contexts according to the session attributes contained in the Session Start Request message.

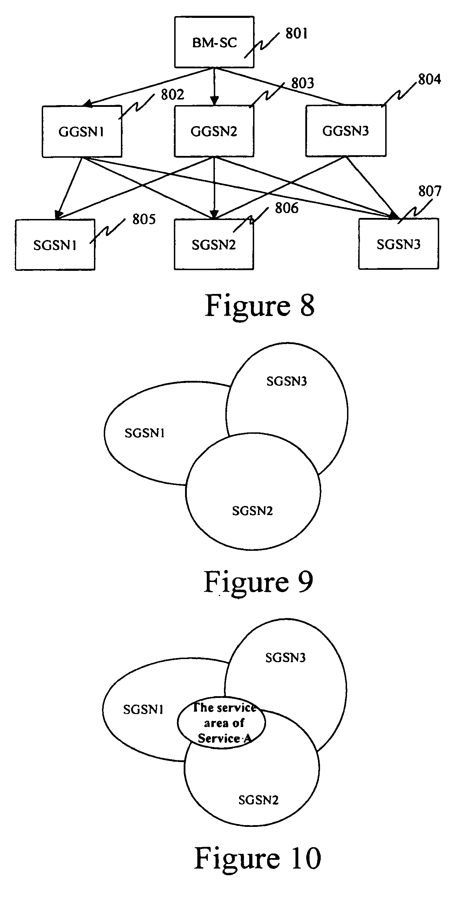

14) SGSN1, SGSN2 and SGSN3 respectively stores the session attributes and the 2G/3G indicator in their respective MBMS Bearer Contexts, sets the State attributes of their respective MBMS Bearer Context to "active", and respectively returns an MBMS session start response message, hereinafter referred to as MBMS Session Start Response message, to the GGSN, and the MBMS Session Start Response message contains the Tunnel End Identifier (TEID) for a bearer plane that the GGSN shall use for forwarding the MBMS data. Thus, the bearer plane established for broadcast MBMS bearer service A by the core network is as shown in Figure 8 by means of the black solid line with an arrow. 15) Each SGSN sends to the relevant BSC/RNC connected with the SGSN an MBMS session start request message, hereinafter referred to as MBMS Session Start Request message, which provides session attributes such as TMGI, QoS, MBMS Service Area, session identifier, estimated session duration, broadcast/multicast, etc., and a 2G/3G indicator. The SGSN determines whether the MBMS Session Start Request is sent only to BSCs, or only to RNCs, or to both BSCs and RNCs according to the 2G/3G indicator.

For broadcast MBMS bearer service A, if having no MBMS Bearer Context corresponding to the current MBMS service, the BSC/RNC creates an MBMS Bearer Context according to the session attributes contained in the Session Start Request message.

For each SGSN, the relevant BSC/RNC may be all the BACs/RNCs connected with the relevant SGSN, or the partial BSCs/RNCs connected with the SGSN and

corresponding to an overlap area obtained by comparing the geographical coverage area of BSCs/RNCs and the MBMS service area. Taking SGSN1 as an example, the relevant BSC/RNC may be all the BACs/RNCs connected with SGSN1, or the partial BSCs/RNCs which are connected with SGSN1 and corresponding to an overlap area acquired by comparing the geographical coverage area of BSCs/RNCs with the area determined by the MBMS service area information in the current MBMS session Start Request message.

16) the BSC in Iu mode /RNC stores the session attributes in the MBMS Bearer Context, sets the State attribute of its MBMS Bearer Context to "active", and returns an MBMS session start response message, hereinafter referred to as MBMS Session Start Response message, to the SGSN. The RNC contains in the MBMS Session Start Response message the TEID for the Iu bearer plane that the SGSN shall use for forwarding MBMS data.

If receiving multiple MBMS Session Start Requests message which contains parameters of the Iu bearer plane, a BSC/RNC will return only one successful MBMS Session Start Response message for establishing one Iu bearer plane with one SGSN.

Hereinafter, the BSC/RNC establishes necessary radio resources for the transfer of MBMS data to the interested UE within the MBMS service area.

After the completion of the session start procedure, the process enters the session performing procedure, i.e. the procedure for performing data communication by means of the radio resources established by the BSC/RNC.

When considering that an MBMS session will be terminated, the BM-SC initiates an MBMS Session Stop Procedure. A session stop procedure of the example in accordance with the first embodiment preferably includes items 21-26.

21) The BM-SC sends a session stop request message, hereinafter referred to as Session Stop Request message, to GGSN1 and GGSN2 listed in the list of downstream nodes for the BM-SC, to indicate that the MBMS session is terminated and the bearer plane resources may be released, and sets the State attribute of its MBMS Bearer Context to 'standby'.

22) After receiving the Session Stop Request message, GGSN1 and GGSN2 respectively returns a session stop response message, hereinafter referred to as Session Stop Response message, to the BM-SC. 23) GGSN1 and GGSN2 respectively sends an MBMS session stop request message, hereinafter referred to as MBMS Session Stop Request message, to the SGSNs listed in their respective lists of downstream nodes to release the bearer plane resources corresponding to the SGSNs, and sets the State attribute of their respective MBMS Bearer Contexts to 'standby'. Particularly, GGSN1 sends to SGSN1 a session stop request message, hereinafter referred to as Session Stop Request message; GGSN2 sends to SGSN2 and SGSN3 a session stop request message, hereinafter referred to as Session Stop Request message, respectively.

For broadcast MBMS bearer service A, GGSN1 and GGSN2 may release their respective MBMS Bearer Contexts.

24) After receiving the MBMS Session Stop Request message, SGSN1, SGSN2 and SGSN3 respectively returns an MBMS session stop response message, hereinafter referred to as MBMS Session Stop Response message, to GGSN1 and GGSN2 respectively.

25) Each SGSN releases the TEID respectively, releases the bearer plane resources over which MBMS data of the corresponding MBMS are received from the GGSN, and sends an MBMS session stop request message, hereinafter referred to as MBMS Session Stop Request message, to all the BSCs/RNCs having a bearer plane established with the SGSN, respectively.

For broadcast MBMS bearer service A, SGSN1, SGSN2 and SGSN3 may release their respective MBMS Bearer Contexts.

26) after each BSC/RNC receives the MBMS Session Stop Request message, the RNC releases the corresponding radio resources and Iu resources, and the BSC releases the corresponding radio resources; each BSC/RNC respectively returns an MBMS session stop response message, hereinafter referred to as MBMS Session Stop Response message, to the SGSN to which the BSC/RNC belongs.

For broadcast MBMS bearer service A, each BSC/RNC may release the MBMS Bearer Context thereof.

In accordance with a second embodiment of the present invention, the operator, in the BM-SC via an OAM, configures a list of downstream nodes for the BM-SC, i.e. a GGSN list. The BM-SC obtains the total MBMS service area from a content provider or a network operator, or obtains the total MBMS service area via the OAM configuration; hereinafter, the BM-SC compares the total MBMS service area with geographical coverage areas of all the SGSNs in the network to determine whether an overlap area exists, and creates an SGSN list serving the MBMS, according to the determined result.

After the SGSN list is determined, list of downstream nodes for each GGSN will be determined, i.e. downstream SGSNs, serving the current MBMS, of each GGSN is determined. The list of downstream nodes for each GGSN may be determined according to the geographical location relation between SGSNs and each GGSN, e.g. an SGSN selects the nearby GGSN as the parent GGSN of the SGSN; or may be configured by an operator.

In the second embodiment of the present invention, the session start procedure and the session stop procedure are completely the same as that in the first embodiment of the present invention apart from the approach for obtaining the SGSN list.

For example, there exists a mobile operation network, the network topology of which is as shown in Figure 7, including one BM-SC, three GGSNs and three SGSNs. The BM-SC connects with GGSN1, GGSN2 and GGSN3; both GGSN 1 and GGSN2 connect with SGSN1, SGSN2 and SGSN3; and GGSN3 connects with SGSN2 and SGSN3. Each area administrated respectively by SGSN1, SGSN2 and SGSN3 is as shown in Figure 9; when it is needed to provide broadcast MBMS bearer service A in the mobile operation network, the coverage area of broadcast MBMS bearer service A is as shown in Figure 10 by means of the shade area.

Likewise, the network architecture as shown in Figure 7 and the BSC/RNC connected with SGSN1, SGSN2 and SGSN3 in the example in accordance with the second embodiment of the present invention may constitute a system for controlling the MBMS session procedure; a list of downstream nodes for the BM-SC and a list of downstream nodes for each GGSN listed in the list of downstream nodes for the BM-SC are configured in the BM-SC of the system.

The BM-SC obtains the total service area of MBMS bearer service A from a content provider or a network operator, or via OAM configuration; how to obtain the total service area of MBMS bearer service A is the same as the prior art, which will not be further described here. After obtaining the total service area of MBMS bearer service A, the BM-SC compares the total service area of MBMS bearer service A with the geographical coverage area of SGSN1, SGSN2 and SGSN3 to determine whether an overlap area exists, and creates an SGSN list serving Broadcast MBMS bearer service A according to the determined result. As can be seen from Figure 10, the SGSN list serving Broadcast MBMS bearer service A created by the BM-SC includes identifiers of SGSN1, SGSN2 and SGSN3.

Furthermore, the BM-SC determines that the downstream node of GGSN1 includes SGSN1 and the downstream node of GGSN2 includes SGSN2 and SGSN3 according to the correlation of geographical location between a GGSN and an SGSN.

The subsequent session start procedure and session stop procedure are completely the same as those in the first embodiment of the present invention.

In accordance with a third embodiment of the present invention, based on the above two embodiments of the present invention, if receiving at least two Session Start Request messages for one MBMS bearer service, a downstream node only feeds back a Session Start Response message for one of the Session Start Request messages, and establishes a bearer plane with an upstream node which sends the Session Start Request message. The downstream node may determine to select an upstream node according to the order of receipt of the Session Start Request messages or according to network configuration, for example select a nearby upstream node to feed back a response according to the geographical area configuration, and establish a bearer plane with the upstream node.

For example, there exists a mobile operation network, of which the network topology is as shown in Figure 7, including one BM-SC, three GGSNs and three SGSNs. The BM-SC connects with GGSN1, GGSN2 and GGSN3; both GGSN1 and GGSN2 connect with SGSN1, SGSN2 and SGSN3; and GGSN3 connects with SGSN2 and SGSN3. The areas administrated by SGSN1, SGSN2 and SGSN3 are as shown in Figure 9; it is needed to provide Broadcast MBMS bearer service A in the mobile operation network, and the coverage area of Broadcast MBMS bearer service A is as shown by the shade area in Figure 10.

Likewise, the network architecture as shown in Figure 7 and the BSC/RNC connected with SGSN1, SGSN2 and SGSN3 in accordance with the third embodiment of the present invention may constitute a system for controlling the MBMS session procedure; a list of downstream nodes for the BM-SC and a list of downstream nodes for each GGSN listed in the list of downstream nodes for the BM-SC are configured in the BM-SC of the system.

After obtaining the total MBMS Service Area from a content provider, a network operator or OAM configuration, the BM-SC compares the total MBMS Service Area with the SGSN geographical coverage area in the network to determine whether there exists an overlap area, and creates an SGSN list corresponding to the current broadcast MBMS bearer service according to the determined result. As can be seen from Figure 10, the SGSN list includes SGSN1, SGSN2 and SGSN3. The BM-SC does not distinguish which GGSN these SGSNs belong to.

In a session start procedure, the BM-SC directly sends identifiers of SGSN1, SGSN2 and SGSN3 as an SGSN list to GGSN1 and GGSN2.

After receiving the SGSN list sent by the BM-SC, GGSN1 and GGSN2 directly store the SGSN list as their respective lists of downstream nodes, and send a Session Start Request message to each SGSN listed in the SGSN list.

In accordance with the third embodiment of the present invention, the session start procedure is basically the same as that in the first or second embodiment of the present invention apart from adding a process of determining to select an upstream node before the SGSN returns a Session Start Response message, that is, each SGSN determines whether receiving the Session Start Request messages sent from multiple GGSNs for the same broadcast MBMS bearer service, if so, select one of the multiple GGSNs to return the Session Start Response message. The GGSN may be selected according to the network configuration or the order of receipt of the Session Start Request messages.

In accordance with the third embodiment of the present invention, SGSN1, SGSN2 and SGSN3 will receive a Session Start Request message sent from GGSN1 and GGSN2 for the same broadcast MBMS bearer service; SGSN1 only returns a Session Start Response message to GGSN1, while SGSN2 and SGSN3 only return a Session Start Response message to GGSN2, thereby forming the network topology as shown in Figure 8. In this case, the network architecture as shown in Figure 8 and the BSC/RNC connected with SGSN1, SGSN2 and SGSN3 will constitute a system for controlling the MBMS session procedure.

For the session stop procedure, there are two schemes.

First scheme: After receiving a Session Stop Request message, the SGSN detects whether a bearer plane corresponding to the MBMS is established with the GGSN sending the Session Stop Request message; if so, the SGSN returns to the GGSN a Session Stop Response message, and other steps are the same as those in the first or second embodiment of the present invention; otherwise, the SGSN carries out no operation.

In accordance with the third embodiment of the present invention, after receiving the Session Stop Request message sent by GGSN1, SGSN2 and SGSN3 do not return the Session Stop Response message and do not carry out any extra activity since the bearer plane between SGSN2 and GGSN 1 and the bearer plane between SGSN3 and GGSN1 are not established. After receiving the Session Stop Request message sent by GGSN2, SGSN2 and SGSN3 return the Session Stop Response message and carry out the corresponding session stop procedure when they find that the bearer plane between each of them and GGSN2 has been established.

Second scheme: In the session start procedure, the GGSN records a list of SGSNs which have returned the Session Start Response message; and in the session stop procedure, the GGSN only sends the Session Stop Request message to the recorded SGSNs which have returned the session start response message, since only these SGSNs may establish the bearer plane with the GGSN.

In the session start procedure of the third embodiment of the present invention, if GGSN1 records that SGSN1 is the only SGSN which has returned the Session Start Response message; and in the session stop procedure, GGSN1 only sends to SGSN1 a Session Stop Request message.

In accordance with a fourth embodiment of the present invention, based on the above three embodiments of the present invention, the step of processing respective MBMS Bearer Contexts of the network nodes in the session stop procedure is changed; particularly, in the session stop procedure, for a broadcast MBMS bearer service, the network nodes such as GGSN, SGSN and BSC/RNC release the corresponding MBMS Bearer Contexts after receiving the Session Stop Request message or the session stop procedure is over.

The reason thereof is that the session stop procedure means that no corresponding MBMS bearer plane will be established for a long idle period; to save resources, the corresponding MBMS Bearer Contexts will be released immediately after the session is terminated.

There are several specific implementation schemes about when to delete the MBMS Bearer Contexts corresponding to the current MBMS bearer service by network nodes such as GGSN, SGSN and BSC/RNC: (1) after receiving the Session Stop Request message, the GGSN, SGSN and BSC/RNC immediately release their respective MBMS Bearer Contexts by themselves; (2) after receiving the respective session stop request messages, the GGSN, SGSN and BSC/RNC start a timer respectively, and detect whether having received the Session Start Request message of the next session before the timer expires; if having not received any Session Start Request Message of the next session before the timer expires, each network node releases corresponding MBMS Bearer Context; (3) after the session stop procedure is completed, the GGSN, SGSN and BSC/RNC immediately release their respective MBMS Bearer Contexts by themselves.

For example, there exists a mobile operation network; of which the network topology of the mobile operation network is as shown in Figure 7, including one BM-SC, three GGSNs and three SGSNs. The BM-SC connects with GGSN1, GGSN2 and GGSN3; both GGSN1 and GGSN2 connect with SGSN1, SGSN2 and SGSN3; and GGSN3 connects with SGSN2 and SGSN3. The areas administrated by SGSN1, SGSN2 and SGSN3 are as shown in Figure 9; it is needed to provide broadcast MBMS bearer service A in the network, and the coverage area of broadcast MBMS bearer service A is as shown by the shade area in Figure 10.

Likewise, the network architecture as shown in Figure 7 and the BSC/RNC connected with SGSN1, SGSN2 and SGSN3 in the fourth embodiment of the present invention may constitute a system for controlling the MBMS session procedure; a BM-SC list of downstream nodes and a list of downstream nodes for each GGSN listed in the BM-SC list of downstream nodes are configured in the BM-SC of the system.

The session start procedure in accordance with the fourth embodiment of the present invention is completely the same as that in accordance with the first, second or third embodiment of the present invention.

When considering that an MBMS session will be terminated, the BM-SC will initiate an MBMS session stop procedure. The session stop procedure in accordance with the fourth embodiment of the present invention preferably includes items 31-36.

31)-32) are completely the same as 21)-22) in the first embodiment of the present invention.

33) GGSN1 and GGSN2 respectively sends an MBMS Session Stop Request message, to SGSNs listed in their respective lists of downstream nodes, releases bearer plane resources corresponding to the SGSNs, and sets the State attributes in their respective MBMS Bearer Contexts to 'standby'. Particularly, GGSN1 sends to SGSN1 a Session Stop Request message, and GGSN2 sends to SGSN2 and SGSN3 a Session Stop Request message respectively.

For a broadcast MBMS bearer service A, GGSN 1 and GGSN2 may release their respective MBMS Bearer Contexts.

34) After receiving the Session Stop Request message, SGSN1, SGSN2 and SGSN3 respectively returns an MBMS Session Stop Response message to GGSN1 and GGSN2.

35) Each of these SGSNs respectively releases the TEID and the bearer plane resources for the corresponding SGSN to receive the MBMS data of the corresponding MBMS bearer service from the GGSN, and sends an MBMS Session Stop Request to all the BSCs/RNCs having a bearer plane established with the SGSN.

For a broadcast MBMS bearer service A, SGSN1, SGSN2 and SGSN3 may release their respective MBMS Bearer Contexts.

36) after each BSC/RNC receives the MBMS Session Stop Request message, the RNC releases the corresponding radio resources and Iu resources, and the BSC releases the corresponding radio resources; and each BSC/RNC respectively returns to the parent SGSN an MBMS Session Stop Response message.

For a broadcast MBMS bearer service A, each BSC/RNC may release its MBMS Bearer Context.

The foregoing descriptions are only preferred embodiments of the present invention and are not for use in limiting the protection scope thereof.

## Claims

1. A method for controlling a Multimedia Broadcast Multicast Service, MBMS, session procedure in a radio communications system **characterized by**:
configuring and storing (501), in a Broadcast/Multicast-Service Center, BM-SC, a list of downstream nodes for the BM-SC and a list of downstream nodes for each Gateway GPRS Support Node, GGSN, listed in the list of downstream nodes for the BM-SC;
in a procedure for starting the MBMS session, sending (501), by the BM-SC, to each respective GGSN listed in the list of downstream nodes for the BM-SC a session start request message containing the list of downstream nodes for the GGSN;
sending (503), by each GGSN receiving the session start request message, a session start request message respectively to each SGSN listed in the list of downstream nodes for the GGSN; and
communicating (505, 506), by the SGSN receiving the session start request message, respectively with at least one Base station controller/Radio network controller, BSC/RNC, connected with the SGSN to complete (506) the procedure for starting the session and wherein the MBMS allows for one or more broadcasting services.

2. The method of Claim 1, wherein the list of downstream nodes for the BM-SC is configured in the BS-SC via an Operation and Maintenance, OAM, platform.

3. The method of Claim 1, wherein the list of downstream nodes for each GGSN is configured in the BS-SC via an OAM platform.

4. The method of Claim 1, wherein:
the configuring the list of downstream nodes for each GGSN comprises:
obtaining, by the BM-SC, a total MBMS service area;
comparing the total MBMS service area with geographical coverage areas of all the SGSNs in the network to obtain an overlap area between the MBMS service area and the geographical coverage areas; and
inserting identifiers of all the SGSNs corresponding to the overlap area into the list of downstream nodes for each GGSN.

5. The method of Claim 1, wherein:
the configuring the list of downstream nodes for each GGSN comprises:
obtaining, by the BM-SC, a total MBMS service area;
comparing the total MBMS service area with geographical coverage areas of all the SGSNs in the network to obtain an overlap area between the MBMS service area and the geographical coverage areas;
determining respectively for each GGSN at least one SGSN according to the topology relationship of the GGSN and all the SGSNs corresponding to the overlap area; and
inserting identifiers of the at least one SGSNs determined for each GGSN into the list of downstream nodes for the GGSN.

6. The method of Claim 4 or 5, wherein the obtaining the total MBMS service area comprises:
obtaining the total MBMS service area from a content provider or a network operator, or configuring the total MBMS service area in the BM-SC via an OAM directly.

7. The method of Claim 1, 4, or 5, further comprising:
returning, by the SGSN receiving the session start request message, a session start response message to one GGSN selected from at least two GGSNs if receiving at least two session start request messages respectively sent from the at least two GGSNs for the same MBMS bearer service.

8. The method of Claim 7, wherein the GGSN is selected according to a geographical location configured by the network or according to an order of receipt of the at least two session start request messages respectively sent from the at least two GGSNs.

9. The method of Claim 1, 4, 5 or 7, wherein the session start request message contains: session attributes such as Temporary Mobile Group Identity, TMGI, Quality of Service, QoS, MBMS Service Area, session identifier, estimated session duration, broadcast/multicast, etc., and a 2G/3G indicator.

10. The method of Claim 9, wherein for a broadcast MBMS bearer service, in the procedure for starting the session, the GGSN, SGSN and BSC/RNC receiving the session start request determine whether an MBMS Bearer Context exists therein, and if the MBMS Bearer Context exists therein, continue the procedure for starting the session; and if the MBMS Bearer Context does not exist therein, create an MBMS Bearer Context according to the session attributes contained in the session start request message and continue the procedure for starting the session.

11. The method of Claim 10, further comprising:
storing, by the GGSN receiving the session start request message, the list of downstream nodes for the GGSN contained in the session start request message in the MBMS Bearer Context.

12. The method of Claim 1, 4, 5 or 7, further comprising:
recording, by each GGSN, an identifier of an SGSN which has returned the session start response message to the GGSN.

13. The method of Claim 12, further comprising: in a procedure for stopping the session,
sending, by each GGSN, a session stop request message to the SGSN which has returned the session start response message to the GGSN and is recorded in the GGSN.

14. The method of Claim 1, 4, 5 or 7, further comprising: in a procedure for stopping the session,
determining, by the SGSN receiving the session stop request message, whether the SGSN receiving the session stop request message has established a corresponding bearer plane for an MBMS bearer service with the GGSN sending the session stop request message;
if the SGSN receiving the session stop request message has established the corresponding bearer plane, returning a session stop response message to the GGSN sending the session stop request message.

15. The method of Claim 1, 4, 5 or 7, further comprising: for a broadcast MBMS bearer service, in a procedure for stopping the session, after receiving a session stop request message, releasing, by each of the GGSNs, the SGSNs and the BSCs/RNCs, an MBMS Bearer Context therein respectively after receiving a session stop request message.

16. The method of Claim 15, further comprising:
starting, by each of the GGSNs, the SGSNs and the BSCs/RNCs, a timer respectively upon receipt of the session stop request message;
releasing, by each of the GGSNs, the SGSNs and the BSCs/RNCs, the MBMS Bearer Context therein respectively if having not received any session start request message of a next session before the timer expires.

17. The method of Claim 1, 4, 5 or 7, further comprising: for a broadcast MBMS bearer service, after a procedure for stopping the session is completed, releasing, by each of the GGSNs, the SGSNs and the BSCs/RNCs, an MBMS Bearer Context immediately.

18. The method of Claim 1, wherein the at least one BSC/RNC connected with the SGSN comprises at least one of
each BSC/RNC connected with the SGSN; and
at least one BSC/RNC connected with the SGSN and corresponding to an overlap area obtained by comparing a total MBMS service area with geographical coverage areas of all the BSCs/RNCs in the network.

19. A system for controlling the Multimedia Broadcast/Multicast Service, MBMS, session procedure for radio communications, **characterized by**:
a Broadcast/Multicast-Service Center (701, 801), BM-SC, at least one Gateway GPRS Support Node (702-704, 802-804), GGSN, at least one Serving GPRS Support Node (705-707, 805-807), SGSN, and at least one Base station controller/Radio network controller BSC/RNC; wherein:
the BM-SC (701, 801) is adapted to create a list of downstream nodes for the BM-SC and a list of downstream nodes for each GGSN listed in the list of downstream nodes for the BM-SC;
the BM-SC (701, 801) is adapted to communicate with each GGSN listed in the list of downstream nodes for the BM-SC and send to each GGSN the list of downstream nodes for the GGSN in a procedure for starting the MBMS session;
each GGSN (702-704, 802-804) is adapted to communicate with each SGSN (705-707, 805-807) listed in the list of downstream nodes for the GGSN;
each SGSN (705-707, 805-807) and at least one BSC/RNC connected with the SGSN (705-707, 805-807) are adapted to communicate with each other to complete the session procedure, wherein the MBMS allows for one or more broadcasting services.

20. A Broadcast/Multicast-Service Center, BM-SC, for controlling a Multimedia Broadcast Multicast Service, MBMS, session procedure in a radio communications system, **characterized by**:
means for creating a list of downstream nodes for the BM-SC (701, 801) and a list of downstream nodes for each Gateway GPRS Support Node (702-704, 802-804), GGSN, listed in the list of downstream nodes for the BM-SC; and
means for sending the list of downstream nodes for each GGSN listed in the list of downstream nodes for the BM-SC to the GGSN in a procedure for starting the MBMS session, wherein the MBMS allows for one or more broadcasting services.

## Patentansprüche

1. Verfahren zur Steuerung eines Multimedia Broadcast Multicast Service-, MBMS, Session-Verfahrens in einem Funkverbindungssystem, **dadurch gekennzeichnet, dass:**
in einem Broadcast/Multicast-Servicecenter, BM-SC, ein Verzeichnis von stromabwärts liegenden Knoten für das BM-SC und ein Verzeichnis von stromabwärts liegenden Knoten für jeden Gateway GPRS Support Node, GGSN, die in dem Verzeichnis von stromabwärts liegenden Knoten für das BM-SC aufgelistet sind, konfiguriert und gespeichert (501) wird;
bei einem Vorgang zum Starten der MBMS-Session an jeden der entsprechenden GGSN, die in dem Verzeichnis von stromabwärts liegenden Knoten für das BM-SC aufgelistet sind, eine Session-Start-Anforderungsnachricht mittels des BM-SC gesendet (501) wird, die das Verzeichnis der stromabwärts liegenden Knoten für den GGSN enthält;
von jedem GGSN, der die Session-Start-Anforderungsnachricht empfängt, eine Session-Start-Anforderungsnachricht entsprechend zu jedem der SGSN gesendet (503) wird, die in dem Verzeichnis von stromabwärts liegenden Knoten für den GGSN aufgelistet sind, und
durch den SGSN, der die Session-Startanforderungsnachricht empfängt, entsprechend mit zumindest einem Base-Station-Controller/Radio-Network-Controller, BSC/RNC, kommuniziert (505, 506) wird, der dem SGSN zugeordnet ist, um den Vorgang zum Starten der Session zu vervollständigen (506), und wobei der MBMS einen oder mehrere Broadcasting-Dienste ermöglicht.

2. Verfahren nach Anspruch 1, wobei das Verzeichnis von stromabwärts liegenden Knoten für den BM-SC in dem BS-SC über eine Operations- und Maintenance-, OAM, Plattform konfiguriert ist.

3. Verfahren nach Anspruch 1, wobei das Verzeichnis von stromabwärts liegenden Knoten für jeden GGSN in dem BS-SC über eine OAM-Plattform konfiguriert ist.

4. Verfahren nach Anspruch 1, wobei
das Konfigurieren des Verzeichnisses von stromabwärts liegenden Knoten für jeden GGSN umfasst:
Erhalten eines gesamten MBMS-Dienstbereiches durch das BM-SC; Vergleichen des gesamten MBMS-Dienstbereiches mit geographischen Deckungsbereichen aller SGSNs in dem Netzwerk, um einen Überlappungsbereich zwischen dem MBMS-Dienstbereich und den geographischen Deckungsbereichen zu erhalten; und
Einfügen von Identifizierern für alle SGSNs, die dem Überlappungsbereich entsprechen, in das Verzeichnis von stromabwärts liegenden Knoten für jeden GGSN.

5. Verfahren nach Anspruch 1, wobei
das Konfigurieren des Verzeichnisses von stromabwärts liegenden Knoten für jeden GGSN umfasst:
Erhalten eines gesamten MBMS-Dienstbereiches durch das BMSC; Vergleichen des gesamten MBMS-Dienstbereiches mit geographischen Deckungsbereichen von allen SGSNs in dem Netzwerk, um einen Überlappungsbereich zwischen dem MBMS-Dienstbereich und den geographischen Deckungsbereich zu erhalten; entsprechend Bestimmen von zumindest einem SGSN für jeden GGSN entsprechend der topologischen Verknüpfung des GGSN und aller SGSNs, die dem Überlappungsbereich entsprechen; und
Einfügen von Identifizierern des zumindest einen SGSNs, der für jeden GGSN bestimmt wurde, in das Verzeichnis von stromabwärts liegenden Knoten für den GGSN.

6. Verfahren nach Anspruch 4 oder 5, wobei das Erhalten des gesamten MBMS-Dienstbereiches umfasst:
Erhalten des gesamten MBMS-Dienstbereiches von einem Content-Provider oder einem Netzwerkbetreiber, oder direktes Konfigurieren des gesamten MBMS-Dienstbereiches in dem BM-SC über einen OAM.

7. Verfahren nach Anspruch 1, 4 oder 5, ferner umfassend:
Zurücksenden einer Session-Start-Antwortnachricht an einen GGSN, der aus zumindest zwei GGSNs ausgewählt wurde, durch den SGSN, der die Session-Start-Anforderungsnachricht empfängt, falls zumindest zwei Session-Start-Anforderungsnachrichten empfangen wurden, die jeweils von den zumindest zwei GGSNs für den gleichen MBMS-Bearer-Dienst gesendet wurden.

8. Verfahren nach Anspruch 7, wobei der GGSN entsprechend einer geographischen Stelle, die von dem Netzwerk konfiguriert wird, oder entsprechend einer Empfangsreihenfolge der zumindest zwei Session-Start-Anforderungsnachrichten, die jeweils entsprechend von den zumindest zwei GGSNs gesendet wurden, ausgewählt wird.

9. Verfahren nach Anspruch 1, 4, 5 oder 7, wobei die Session-Start-Anforderungsungsnachricht Session-Attribute wie eine Temporary Mobile Group Identity, TMGI, eine Quality of Service, QoS, eine MBMS Service-Area, einen Session-Identifizierer, eine geschätzte Session-Dauer, Broadcast/Multicast, usw., und einen 2G/3G-Indikator enthält.

10. Verfahren nach Anspruch 9, wobei in der Prozedur, die die Session startet, für einen Broadcast-MBMS-Bearer-Dienst der die Session-Startanfrage empfangende GGSN, SGSN und BSC/RNC, bestimmt, ob darin ein MBMS-Bearer-Kontext vorliegt, und, falls der MBMS-Bearer-Kontext darin vorliegt, die Prozedur zum Starten der Session fortsetzt;
und, falls darin kein MBMS-Bearer-Kontext vorliegt, einen MBMS-Bearer-Kontext entsprechend der Sessionattribute, die in der Session-Start-Anforderungsnachricht enthalten sind, kreiert,
und die Prozedur zum Starten der Session fortsetzt.

11. Verfahren nach Anspruch 10, ferner umfassend:
Speichern des Verzeichnisses von stromabwärts liegenden Knoten für den
GGSN, der in der Session-Start-Anforderungsnachricht in dem MBMS-Bearer-Kontext enthalten ist, mittels des GGSN, der die Session-Start-Anforderungsnachricht empfängt.

12. Verfahren nach Anspruch 1, 4, 5 oder 7, ferner umfassend:
Erfassen eines Identifizierers eines SGSN, der die Session-Start-Antwortnachricht an den GGSN zurückgesendet hat, durch jeden GGSN.

13. Verfahren nach Anspruch 12, wobei ferner in einer Prozedur zum Schließen der Session umfasst ist:
Senden einer Session-Schließ-Anforderungsnachricht an den SGSN, der die Session-Start-Antwortnachricht an den GGSN zurückgesendet hat und in dem GGSN erfasst ist, mittels jedes GGSN.

14. Verfahren nach Anspruch 1, 4, 5 oder 7, wobei ferner in einer Prozedur zum Schließen der Session umfasst ist:
Bestimmen mittels jedes GGSN, ob der SGSN, der die Session-Schließ-Anforderungsnachricht empfängt, durch den SGSN, der die Session-Schließ-Anforderungsnachricht empfängt, eine entsprechende Bearer-Ebene für einen MBMS-Trägerdienst mit dem GGSN eingerichtet hat, der die Session-Schließ-Anforderungsnachricht sendet,
falls der SGSN, der die Session-Schließ-Anforderungsnachricht empfängt, die entsprechende Bearer-Ebene eingerichtet hat, Zurücksenden einer Session-Schließ-Antwortnachricht an den GGSN, der die Session-Schließ-Anforderungsnachricht gesendet hat.

15. Verfahren nach Anspruch 1, 4, 5 oder 7, wobei ferner umfasst ist:
Auflheben eines MBMS-Trägerkontexts in einem Broadcast MBMS-Bearer-Dienst in einer Prozedur zum Schließen der Session, nachdem eine Session-Schließ-Anforderungsnachricht empfangen wurde, durch jeden der GGSNs der SGSNs und der BSCs/RNCs entsprechend nachdem eine Session-Schließ-Anforderungsnachricht empfangen wurde.

16. Verfahren nach Anspruch 15, das ferner umfasst:
Starten eines Timers durch jeden der GGSNs, der SGSNs und der BSCs/RNCs entsprechend nach Erhalt der Session-Schließ-Anforderungsnachricht; entsprechend Auflösen des enthaltenen MBMS-Bearerkontexts durch jeden der GGSNs, der SGSNs und der BSCs/RNCs, falls keine Session-Start-Anforderungsnachricht für eine nächste Session empfangen wurde, bevor der Timer abläuft.

17. Verfahren nach Anspruch 1, 4, 5 oder 7, das ferner umfasst:
unverzügliches Auflösen eines MBMS-Bearerkontexts durch jeden der GGSNs, der SGSNs und der BSCs/RNCs eines Broadcast-MBMS-Trägerdienstes nachdem eine Prozedur zum Schließen der Session vollendet wurde.

18. Verfahren nach Anspruch 1, wobei der zumindest eine BSC/RNC, der dem SGSN zugeordnet ist, zumindest einen von allen mit dem SGSN verbundenen BSCs/RNCs und
zumindest einen von allen mit dem SGSN verbundenen BSCs/RNCs und der einem Überlappungsbereich entspricht, der durch Vergleichen eines gesamten MBMS-Dienstbereiches mit geographischen Deckungsbereichen aller BSCs/RNCs in dem Netzwerk erhalten wurde,
umfasst.

19. Ein System zur Steuerung der Multimedia-Broadcast/Multicastservice-, MBMS, Session-Prozedur für Funkverbindungen, **gekennzeichnet durch**:
Ein Broadcast/Multicast-Servicecenter (701, 801) BM-SC,
zumindest einen Gateway GPRS-Support Node (702-704, 802-804), GGSN, zumindest einen Serving GPRS Support Node (705-707, 805-807), SGSN, und zumindest einen Base Station Controller/Radio Network Controller BSC/RNC; wobei:
der BM-SC (701, 801) geeignet ist, ein Verzeichnis von stromabwärts liegenden Knoten für den BM-SC und ein Verzeichnis von stromabwärts liegenden Knoten für jeden GGSN, der in dem Verzeichnis von stromabwärts liegenden Knoten für den BM-SC aufgelistet ist, zu kreieren;
der BM-SC (701, 801) geeignet ist, mit jedem GGSN, der in dem Verzeichnis von stromabwärts liegenden Knoten für den BM-SC aufgelistet ist, zu kommunizieren und an jeden GGSN das Verzeichnis von stromabwärts liegenden Knoten für den GGSN in einer Prozedur zum Starten der MBMS-Session zu senden;
jeder GGSN (702-704, 802-804) geeignet ist, mit jedem SGSN (705-707, 805-807), der in dem Verzeichnis von stromabwärts liegenden Knoten für den GGSN aufgelistet ist, zu kommunizieren;
jeder SGSN (705-707, 805-807) und zumindest ein BSC/RNC, der dem SGSN (705-707, 805-807) zugeordnet ist, geeignet sind, mit einander zu kommunizieren, um die Session-Prozedur zu vollenden, wobei der MBMS einen oder mehrere Broadcasting Services ermöglicht.

20. Broadcast/Multicast-Service Center, BM-SC, zur Steuerung einer Multimedia Broadcast Multicast Service-, MBMS, Session-Prozedur in einem Funkverbindungssystem, **gekennzeichnet durch**:
Mittel zum Kreieren eines Verzeichnisses von stromabwärts liegenden Knoten für den BM-SC (701, 801) und eines Verzeichnisses von stromabwärts liegenden Knoten für jeden Gateway GPRS Support Node (702-704, 802-804), GGSN, der in dem Verzeichnis von stromabwärts liegenden Knoten für den BM-SC aufgelistet ist; und
Mittel zum Senden des Verzeichnisses von stromabwärts liegenden Knoten für jeden GGSN, der in dem Verzeichnis von stromabwärts liegenden Knoten für den BM-SC aufgelistet ist, an den GGSN in einer Prozedur zum Starten der MBMS-Session,
wobei der MBMS einen oder mehrere Broadcasting Services ermöglicht.

## Revendications

1. Procédé permettant de commander une session d'un Service de Diffusion/Multidiffusion Multimedia, MBMS, dans un système de communications radio, **caractérisé par** les étapes consistant à:
configurer et stocker (501), dans un Centre de Service de Diffusion/Multidiffusion, BM-SC, une liste de noeuds aval pour le BM-SC et une liste de noeuds aval pour chaque noeud de support GPRS de Centre Terminal, GGSN, énuméré dans la liste de noeuds aval pour le BM-SC;
dans une procédure de démarrage de la session MBMS, envoyer (501), par le BM-SC, à chaque GGSN respectif énuméré dans la liste de noeuds aval des BM-SC, un message de requête de démarrage de session contenant la liste de noeuds aval pour le GGSN;
envoyer (503), par chaque GGSN recevant le message de requête de démarrage de session, un message de requête de démarrage de session respectivement à chaque SGSN énuméré dans la liste de noeuds aval pour le GGSN; et
communiquer (505, 506), par le SGSN recevant le message de requête de démarrage de session, respectivement avec au moins un contrôleur de station de base/contrôleur de réseau de radiocommunication, BSC/RNC, connecté au SGSN pour compléter (506) la procédure de démarrage de la session, et où le MBMS permet un ou plusieurs services de diffusion.

2. Procédé selon la revendication 1, où la liste de noeuds aval pour le BM-SC est configurée dans le BS-SC par une plate-forme d'Opération et de Mise à Jour, OAM.

3. Procédé selon la revendication 1, où la liste de noeuds aval pour chaque GGSN est configurée dans le BS-SC par une plate-forme OAM.

4. Procédé selon la revendication 1, où:
la configuration de la liste de noeuds aval pour chaque GGSN comprend:
l'obtention, par le BM-SC, d'une zone de service totale MBMS;
la comparaison de la zone de service totale MBMS avec des zones de couverture géographiques de tous les SGSNs dans le réseau pour obtenir une zone de recouvrement entre la zone de service MBMS et les zones de couverture géographiques; et
l'insertion d'identificateurs de tous les SGSNs correspondant à la zone de recouvrement dans la liste de noeuds aval pour chaque GGSN.

5. Procédé selon la revendication 1, où:
la configuration de la liste de noeuds aval pour chaque GGSN comprend:
l'obtention, par le BM-SC, d'une zone de service totale MBMS;
la comparaison de la zone de service MBMS totale avec les zones de couverture géographiques de tous les SGSNs dans le réseau pour obtenir une zone de recouvrement entre la zone de service MBMS et les zones de couverture géographiques;
la détermination respectivement pour chaque GGNS d'au moins un SGSN en accord avec la relation topologique du GGSN et de tous les SGSNs correspondants à la zone de recouvrement; et
l'insertion d'identificateurs d'au moins un SGSN précité déterminé pour chaque GGSN dans la liste de noeuds aval pour le GGSN.

6. Procédé selon la revendication 4 ou 5, où l'obtention de la zone de service MBMS totale comprend:
l'obtention de la zone de service MBMS totale à partir d'un fournisseur de contenu ou d'un opérateur de réseau, ou la configuration de la zone de service MBMS totale dans le BM-SC par une OAM directement.

7. Procédé selon la revendication 1, 4 ou 5, comprenant en outre:
le retour, par le SGSN recevant le message de requête de démarrage de session, d'un message de réponse de démarrage de session à un GGSN sélectionné parmi au moins deux GGSNs lors de la réception d'au moins deux messages de requête de démarrage de session respectivement envoyés par au moins deux GGSNs précités pour le même service de support MBMS.

8. Procédé selon la revendication 7, où le GGSN est sélectionné en accord avec un emplacement géographique configuré par le réseau ou selon un ordre de réception d'au moins deux messages de requête de démarrage de session précités respectivement envoyés par au moins deux GGSNs précités.

9. Procédé selon la revendication 1, 4, 5 ou 7, où le message de requête de démarrage de session contient: des attributs de session comme une Identité de Groupe Mobile Temporaire, TMGI, la Qualité de Service, QoS, une Zone de Service MBMS, un identificateur de session, une durée de session estimée, une diffusion/multidiffusion, etc. et un indicateur 2G/3G.

10. Procédé selon la revendication 9, où pour un service de support MBMS de diffusion, dans la procédure de démarrage de la session, le GGSN, SGSN et BSC/RNC recevant la requête de démarrage de session déterminent si un Contexte de Support MBMS existe dans celle-ci, et si le Contexte de Support MBMS existe dans celle-ci, continuer la procédure pour démarrer la session; et si le Contexte de Support MBMS n'existe pas dans celle-ci, créer un Contexte de Support MBMS selon les attributs de session contenus dans le message de requête de démarrage de session et continuer la procédure de démarrage de session.

11. Procédé selon la revendication 10, comprenant en outre:
stocker, par le GGSN recevant le message de requête de démarrage de session, la liste de noeuds aval pour le GGSN se trouvant dans le message de requête de démarrage de session dans le Contexte de Support MBMS.

12. Procédé selon la revendication 1, 4, 5 ou 7, comprenant en outre:
l'enregistrement, par chaque GGSN, d'un identificateur d'un SGSN qui a retourné le message de réponse de démarrage de session au GGSN.

13. Procédé selon la revendication 12, comprenant en outre: dans une procédure pour arrêter la session, l'envoi, par chaque GGSN, d'un message de requête d'arrêt de session au SGSN qui a retourné le message de réponse de démarrage de session au GGSN et est enregistré dans le GGSN.

14. Procédé selon la revendication 1, 4, 5 ou 7, comprenant en outre: dans une procédure pour arrêter la session,
la détermination; par le SGSN recevant le message de requête d'arrêt de session, si le SGSN recevant le message de requête d'arrêt de session a établi un plan de support correspondant pour un service de support MBMS avec le GGSN envoyant le message de requête d'arrêt de session;
si le SGSN recevant le message de requête d'arrêt de session a établi le plan de support correspondant, retourner un message de réponse d'arrêt de session au GGSN envoyant le message de requête d'arrêt de session.

15. Procédé selon la revendication 1,4,5 ou 7, comprenant en outre: pour un service de support MBMS de diffusion, dans une procédure d'arrêt de la session, après la réception d'un message de requête d'arrêt de session, libérer, par chacun des GGSNs, des SGSNs et des BSCs/RNCs, et un Contexte de Support MBMS dans ceux-ci respectivement, après la réception d'un message de requête d'arrêt de session.

16. Procédé selon la revendication 15, comprenant en outre:
le démarrage, par chacun des GGSNs, des SGSNs et des BSCs/RNCs, une horloge respectivement lors de la réception d'un message de requête d'arrêt de session;
libérer, par chacun des GGSNs, des SGSNs et des BSCs/RNCs,le Contexte de Support MBMS dans ceux-ci respectivement, s'ils n'ont pas reçu de message de requête de démarrage de session d'une session suivante avant que l'horloge n'expire.

17. Procédé selon la revendication 1, 4, 5 ou 7, comprenant en outre: pour un service de support MBMS de diffusion, après qu'une procédure d'arrêt de la session est achevée, la libération, par chacun des GGSNs, des SGSNs et des BSCs/RNCs, un Contexte de Support MBMS immédiatement.

18. Procédé selon la revendication 1, où au moins un BSC/RNC précité connecté au SGSN comprend au moins un de
chaque BSC/RNC connecté au SGSN; et
au moins un BSC/RNC connecté au SGSN et correspondant à une zone de recouvrement obtenue en comparant une zone de service MBMS totale avec les zones de couverture géographiques de tous les BSCs/RNCs dans le réseau.

19. Système permettant de commander une session d'un service de Diffusion/Multidiffusion Multimédia, MBMS, pour des communications radio, **caractérisé par**:
un Centre de Service de Diffusion/Multidiffusion (701,801), BM-SC, au moins un noeud de Support GPRS de Centre Terminal (702-704, 802-804), GGSN, au moins un Noeud de Support GPRS Serveur (705-707, 805-807), SGSN, et au moins un contrôleur de station de base/contrôleur de réseau radio BSC/RNC; où:
le BM-SC (701, 801) est apte à créer une liste de noeuds aval pour le BM-SC et une liste de noeuds aval pour chaque GGSN énuméré dans la liste de noeuds aval pour le BM-SC;
le BM-SC (701, 801) est apte à communiquer avec chaque GGSN énuméré dans la liste de noeuds aval pour le BM-SC et à envoyer à chaque GGSN la liste de noeuds aval pour le GGSN dans une procédure de démarrage de la session MBMS;
chaque GGSN (702-704, 802-804) est apte à communiquer avec chaque SGSN (705-707, 805-807) énuméré dans la liste de noeuds aval pour le GGSN;
chaque SGSN (705-707, 805-807) et au moins un BSC/RNC connecté au SGSN (705-707, 805-807) sont aptes à communiquer entre eux pour compléter la procédure de session, où le MBMS permet un ou plusieurs services de diffusion.

20. Centre de Service de Diffusion/Multidiffusion, BM-SC, pour commander une procédure de session de Service de Diffusion/Multidiffusion Multimédia, MBMS, dans un système de communications radio, **caractérisé par**
un moyen pour créer une liste de noeuds aval pour le BM-SC (701, 801) et une liste de noeuds aval pour chaque Noeud de Support GPRS de Centre Terminal (702-704, 802-804), GGSN, énumérés dans la liste de noeuds aval pour le BM-SC; et
un moyen pour envoyer la liste de noeuds aval pour chaque GGSN énuméré dans la liste de noeuds aval pour le BM-SC au GGSN dans une procédure de démarrage de la session MBMS, où le MBMS permet un ou plusieurs services de diffusion.
